# EUROPÄISCHE PATENTSCHRIFT

(11) **EP 1 816 155 B1**
(45) Veröffentlichungstag und Bekanntmachung des Hinweises auf die Patenterteilung: **29.06.2011**
(21) Anmeldenummer: 06002415.5
(22) Anmeldetag: 07.02.2006
(51) Int. Cl.: C08J 7/00

(54) **Haftungsmindernde oder haftungsverhindernde Oberflächen**
Surfaces that reduce adhesion
Des surfaces qui réduisent collage

(43) Veröffentlichungstag der Anmeldung: 08.08.2007
(73) Patentinhaber: Geberit International AG, 8645 Jona (CH)
(72) Erfinder: Hirayama, Martina, 8401 Winterthur (CH); Meier, Lorenz, 8006 Zürich (CH)
(74) Vertreter: Sutter, Kurt

(56) Entgegenhaltungen:
- EP-A- 1 597 069

## Beschreibung

### Hintergrund

Die vorliegende Erfindung betrifft modifizierte Oberflächen, insbesondere Oberflächen, die durch Aufbringen einer speziellen Oberflächenschicht haftungsvermindernd oder haftungsverhindernd gegenüber verschiedenen Ablagerungen sind.

### Stand der Technik

Die Bildung von Ablagerungen jeglicher Art, seien sie anorganischer Natur, wie Kalk oder Russ, organischer Natur, wie Fettfilme, oder biologischer Natur, wie Biofilme, ist ein lange bekanntes und bereits viel untersuchtes Gebiet.

Die Verhinderung von Kalkablagerungen oder kalkhaltigen Ablagerungen ist ein grosses Problem bei allen Wasser führenden Systemen, wie Wasserzu- und -ableitungen, Waschmaschinen, Boilern etc. Bis heute wird die Verhinderung von Ablagerungen primär durch Behandlung des kalkhaltigen Wassers angegangen, z.B. durch Zumischen von Calcium bindenden Stoffen, wie Phosphaten, Zeolithen und geeigneten Polymeren, wie z.B. Polyasparaginsäure, oder durch Entfernen des Calciums mittels Ionenaustauscher oder durch Magnetbehandlung.

Weitere Ablagerungen, die unter hohem Zeitaufwand entfernet werden müssen sind
- Vereisungen an z.B. Windschutzscheiben von Autos oder an Flugzeugen,
- Ablagerungen von Umweltschmutz auf Fensterscheiben und Hausfassaden,
- Graffity, und
- Biofilme.

In diesen Bereichen ist es nicht möglich die belagsbildenden Stoffe in ihrer üblichen Umgebung zu beeinflussen und die Entwicklung in den letzten Jahren ging deshalb in Richtung speziell strukturierter Oberflächen (Lotus-Effekt). Im Bereich der Verhinderung von Biofilmen wurden neben biociden Substanzen, wie Silber und organischen Zinnverbindungen, auch Oberflächenmodifikationen durch Aufbringen von Adsorptionsschichten, insbesondere SAMs (Self-Assembled-Monolayers) studiert, allerdings mit sehr unterschiedlichen Erfolgen. WO 2004/078930 schlägt deshalb vor, die Oberfläche mittels Oberflächenpolymerisation zu modifizieren.

Ziel der vorliegenden Erfindung war es, eine behandelte Oberfläche bereitzustellen, die einfach hergestellt werden kann, und die gegen eine Vielzahl von Ablagerungen eingesetzt werden kann, insbesondere auch zur Verhinderung von anorganischen Stoffen enthaltenden Ablagerungen, wie Kalkablagerungen, resp. zur Verminderung deren Haftung an den Oberflächen.

### Darstellung der Erfindung

Dieses Ziel wurde erreicht durch die Bereitstellung von Substraten mit einer haftungsvermindernden oder haftungsverhindernden Oberfläche, wobei die Substratoberfläche mit einer haftungsvermindernden oder haftungsverhindernden Oberflächenschicht versehen ist, die zumindest in einer äussersten, lösungsmittelnahen Schicht sich in die Umgebung der Oberfläche erstreckende oberflächenmodifizierende Polymere aufweist und wobei die oberflächenmodifizierende Schicht einen Rückzugswinkel von <40° aufweist und die oberflächenmodifizierendenPolymere einen Heteroatomanteil von ≤ 4 haben.

Ein Heteroatomanteil von ≤4 hat sich für hydrophile Ziellösungsmittel, insbesondere Wasser und wässrige Lösungen, als wesentlich herausgestellt, für hydrophobe Ziellösungsmittel ist der Heteroatomanteil dagegen vorzugsweise >4.

Solche Oberflächen eignen sich zur Verhinderung oder zur Verminderung der Haftung von anorganischen und/oder organischen und/oder biologischen Ablagerungen.

Der Begriff Polymer, wie er im Zusammenhang mit den die Oberfläche modifizierenden Ketten, insbesondere den in der äussersten, lösungsmittelnahen Schicht enthaltenen Ketten gebraucht wird, umfasst auch Oligomere. Üblicherweise sind Ketten ab ca. 8 Atomen, vorzugsweise mindestens 12 Atomen in der Hauptkette, bei verzweigten Polymeren in der längsten Kette, geeignet, wobei mindestens 2, vorzugsweise mindestens 3 Monomereinheiten vorhanden sein sollten.

Ein Heterosubstitutionsgrad von maximal 4 bedeutet, dass maximal 4 C-Atome (oder Si-Atome) pro Heteroatom, insbesondere O und N, gelegentlich auch S und P, vorhanden sind. Gegenionen werden für die Bestimmung des Heteroatomanteils miteinbezogen, nicht aber Wassestoffatome, resp. Wasserstoffionen.

Die vorliegende Erfindung bezieht sich nicht nur auf Lösungen sondern auch auf Emulsionen und Suspensionen. Daher wird in der Folge von Flüssigkeiten gesprochen. Für die flüssig vorliegenden und eine kontinuierliche Phase bildenden Stoffe wird auch bei Suspensionen und Emulsionen der Begriff Lösungsmittel verwendet.

Es wird angenommen, ohne dass die Erfindung durch diese Interpretation bisheriger Ergebnisse beschränkt werden soll, dass die guten Resultate, die mit erfindungsgemässen Oberflächen erhalten wurden, damit zusammenhängen, dass die Polymere eine hohe Löslichkeit und/oder Quellbarkeit im Ziellösungsmittel, insbesondere in wässrigen Lösungen, haben. Zur Herstellung erfindungsgemässer Schichten eignen sich insbesondere oberflächenmodifizierende Polymere, die als solche, d.h. im Bulk, eine Löslichkeit im Ziellösungsmittel, insbesondere in Wasser oder einer wässrigen Lösung, von mindestens 10 g/l aufweisen. Infolge der hohen Löslichkeit wird die Oberfläche durch eine Art von flüssiger Schicht gebildet, die eine feste Haftung von Ablagerungen verhindert. Das weitere Kriterium, das aufgrund der bisherigen Resultate als vorteilhaft angesehen wird, ist eine hohe Quellbarkeit im Ziellösungsmittel. Durch die Quellbarkeit verändern sich Dicke und Struktur der Oberflächenschicht bereits bei sehr geringen Lösungsmittelmengen, was einer festen Haftung, einem Festsetzen der Ablagerungen entgegenwirkt. Dabei sollte die Quellbarkeit von Polymeren, die zur Herstellung der aktiven Schicht verwendet werden, vorzugsweise derart sein, dass die Volumenzunahme (bestimmt im Bulk des Polymers) mindestens 20 %, vorzugsweise mindestens 30 % bezogen auf das Volumen im trockenen Zustand beträgt.

Damit die Quellbarkeit, wie auch die Löslichkeit, ihre Wirkung voll entfalten können, ist es wichtig, dass die Polymere nicht zu dicht aneinander gereiht in der äussersten, lösungsmittelnahen Schicht vorliegen. Eine erfindungsgemäss geeignete Schicht zeichnet sich durch einen Rückzugswinkel von <40°, vorzugsweise <30°, speziell bevorzugt <20° und insbesondere <10° gegenüber dem Ziellösungsmittel aus. Unter Rückzugswinkel wird ein spezieller Wert des Kontaktwinkels verstanden. Der Kontaktwinkel wird üblicherweise statisch bestimmt. Beim Rückzugswinkel wird auf eine Oberfläche ein Tropfen aufgebracht und dieser Tropfen wieder aufgesaugt. Der Rückzugswinkel bezieht sich auf den dynamisch bestimmten Kontaktwinkel während des Absaugens.

Unter der äussersten, lösungsmittelnahen Schicht wird die Schicht, oder der Teil einer Oberflächenbeschichtung verstanden, deren Moleküle oder Kettenteile sich frei in das Lösungsmittel erstrecken. Es handelt sich dabei um eine Schicht von mindestens ca. 1 nm bis mindestens ca. 10 nm Dicke und üblicherweise nicht mehr als 100 nm Dicke. Unter dieser äussersten, lösungsmittelnahen Schicht kann eine Schicht aus gleichem Material angeordnet sein, die wesentlich dichter sein kann, oder die unter dieser äusseren Schicht liegende Schicht kann aus andersartigen Molekülen bestehen, die nachfolgend als Anker oder Ankermoleküle bezeichnet werden, und die vorzugsweise Ankerpolymere sind. Es wird angenommen dass der Vorteil der geringeren Flächenbelegung der äussersten Schicht darin besteht, dass trotz Verankerung der Moleküle eine Art dreidimensionaler Quellung resp. Löslichkeit möglich ist und dass sich die Moleküle um ihren Verankerungspunkt herum frei bewegen können.

Ebenfalls der guten Beweglichkeit zuträglich ist die spezielle Wahl des Polymers resp. der darin enthaltenen Substituenten.

Die Substituenten am Polymer, resp. die Polarität der Polymerkette selbst, richten sich nach der Polarität des Ziellösungsmittels. Für polare Ziellösungsmittel sind polare Gruppen geeignet, wie die nachfolgend beispielhaft beschriebenen Gruppen.

Für die Verwendung in polaren Ziellösungsmitteln, insbesondere wässrigen Lösungen, Suspensionen oder Emulsionen, kann das oberflächenmodifizierende Polymer polare Einheiten in der Hauptkette und/oder in modifizierenden Seitenketten enthalten.

Bewährt haben sich insbesondere oberflächenmodifizierende Polymere mit einem Heteroatomanteil von maximal 4.

Stark bevorzugt sind Heteroatome, die keine Wasserstoffdonoren sind und die nicht deprotonierbar sind, d.h. die bevorzugten Heteroatome sind z.B. alkyliert oder - anders ausgedrückt - die oberflächenmodifizierenden Polymere enthalten möglichst wenig -COOH, -OH und -NHR Gruppen, wobei R für Wasserstoff oder irgendeinen kleinen organischen Rest steht, der die Deprotonierung resp. die Wasserstoffbrückenbildung des Amins zulassen würde. Im Allgemeinen sind maximal 40% der Heteroatome enthaltenden Gruppen deprotonierbar und/oder zur Wasserstoffbrückenbildung befähigt, vorzugsweise maximal 20 %, insbesondere 0%.

Die Beweglichkeit der oberflächenmodifizierenden Moleküle wird auch Unterstützt durch die Vermeidung grösserer Anteile an sp²-hybridisierten Kohlenstoff-Zentren (Aromaten, Carbonyle, Ester etc., insbesondere Aromaten) innerhalb der Polymerkette. Die Anzahl sp²-hybridisierter Kohlenstoff-Zentren in der äussersten, lösungsmittelnahen Schicht sollte maximal 50 % betragen, vorzugsweise maximal 10%, speziell bevorzugt 0%, wobei die Anzahl der sp²-hybridisierten C-Zentren bezogen auf die Gesamtheit der Atome (ohne H) gerechnet wird.

Die nachfolgend angegebenen Verbindungen sind nur Beispiele für oberflächenmodifizierende Moleküle, die für wässrige Systeme geeignet sind. Die Polymere können auch zwei oder mehr verschiedene der unten angegebenen Substituenten enthalten, z.B. neben -O-R auch -C=O und/oder -COOR, oder Copolymere sein, die aus Monomeren resp. Einheiten aufgebaut sind, wie sie in den unten angegebenen Polymeren spezifiziert sind. Die Polymere können als Konstitutions-, Konfigurations-, und Konformationsisomere vorliegen, insbesondere sind auch verschiedene topologische Isomere, wie lineare Polymere, verzweigte Polymere, Sternpolymere oder Kammpolymere sowie Vernetzungen möglich.

Ein die Verankerung an der Oberfläche fördernder resp. die Verankerung bewirkender Anker, resp. eine als Anker dienende Gruppe, wird separat behandelt.

Beispielhafte oberflächenmodifizierende Polymere sind:
- Seitenkettenmodifizierte Polymere,
- Polyoxoalkylene,
- Polyalkylenimine,
- Polyamide (substituierte und unsubstituierte),
- Polyetherester,
- Polyetherurethane,
- Polyetheramide,
- Poly-Sulfoxide,
- Poly-Sulfone, und
- Phosphorhaltige Polymere.

Spezielle Beispiele zu diesen Gruppen sind in den nachfolgenden Formeln gezeigt.

R1 bezieht sich auf carbonylartige Gruppen wie Formyl, Acetyl oder carbonylterminierte PEG-Einheiten.

R2 bezieht sich auf H, Methyl, Ethyl, Ethylen-oxy-R4, längere PEG-Einheiten, insbesondere Ketten mit 1 bis 200 PEG-Einheiten, mit Ester oder Amiden modifizierte Gruppen, aber auch modifizierte oder unmodifizierte Oligoethylenimine.

R3 ist eine Methylenoxy-Einheit, welche mit R1 oder R2 Gruppen modifiziert wurde.

R4 ist eine Gruppe ausgewählt aus entweder R1 oder R2.

R5 ist entweder -OR2 oder -N(R2)₂, und

R ist eine Gruppe ausgewählt aus R1, R2, R3 oder R4.

Alle Substituenten R, R1, R2, R3, R4 und R5 können unabhängig von einander gleich oder verschieden sein. So kann beispielsweise innerhalb eines Substituenten R2 = Ethylen-oxy-R4 der Rest R4 unterschiedliche R2 bedeuten, z.B. wieder Ethylen-oxy-R4, wodurch eine Polyethylenglycol-Kette definiert wird, und/oder R2 = Wasserstoff, Methyl oder Ethyl, wodurch die Kette abgebrochen resp. terminiert wird.

### Bevorzugte mögliche aktive Seitenketten:

Geeignete aktive Seitenketten können sich zusammensetzen aus Zwischengliedern und terminierenden Elementen.
R1: 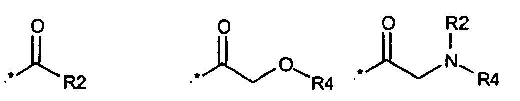 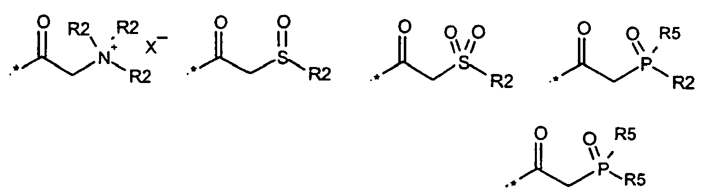
R2: -H, -Me, -Et 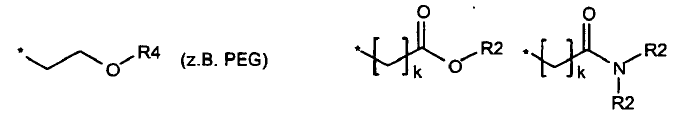 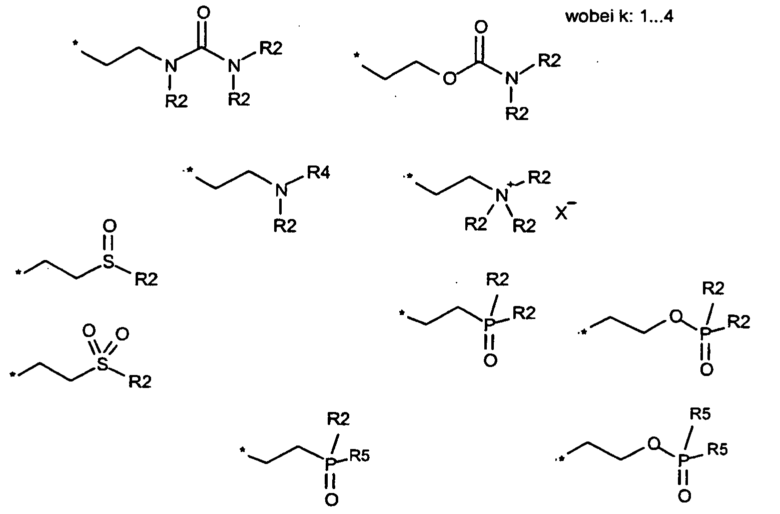
R3: -CH2O-R1 oder-CH2O-R2
R4: R1, R2
R5: -OR2 oder-N(R2)2
R:R1,R2,R3,R4

Inbegriffen sind auch solche Substituenten, welche sich aus Bausteinen der Seitenketten-modifizierte Polymere zusammensetzen.

### Beispiele für Seitenketten-modifizierte Polymere

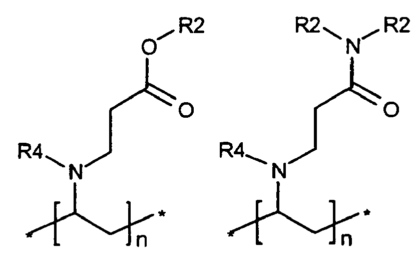

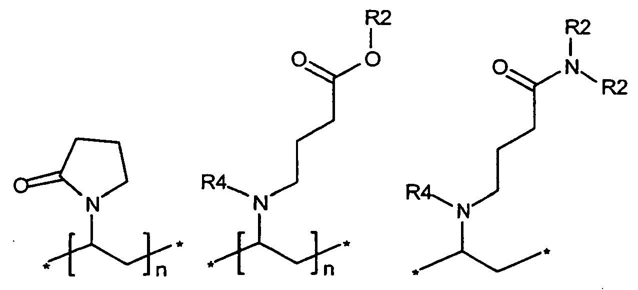

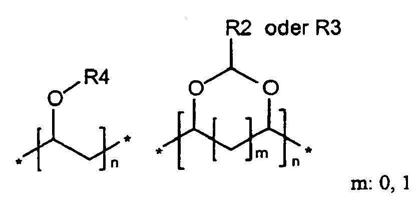

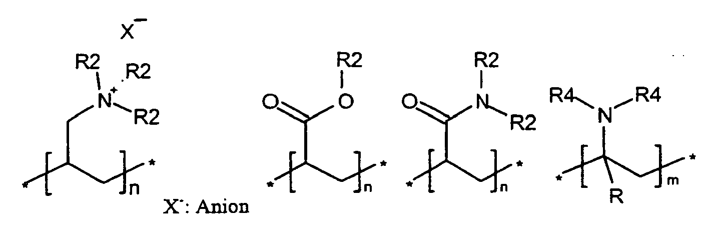

### Beispiele für Polyoxoalkylene/Polyalkylenimine

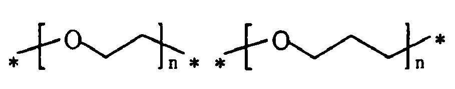

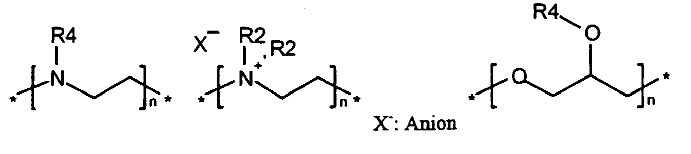

### Beispiele für Polyamide (substituierte oder unsubstituierte) .

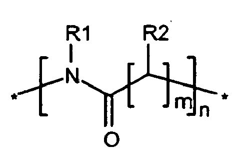

### Beispiele für gemischte Polymere: Etherester, Etherurethane, Etheramide

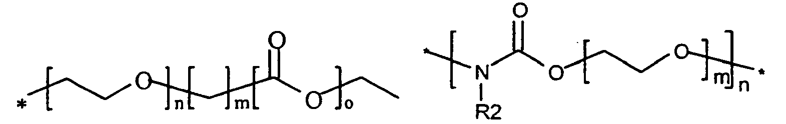

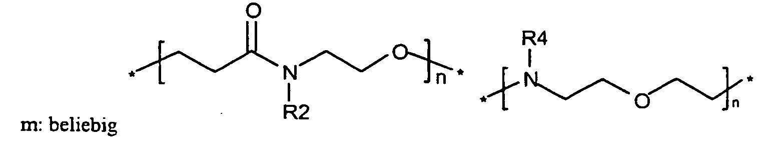

### Beispiele für Poly-Sulfoxide und Poly-Sulfone

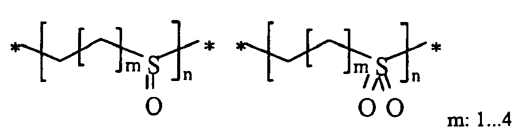

### Beispiele für phosphorhaltige Polymere

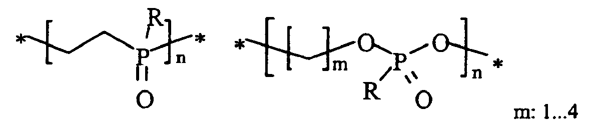

Die Polymere können rein, d.h. nur jeweils eine Sorte an Polymeren, oder in Mischung mit einer oder mehreren weiteren Sorten von Polymeren eingesetzt werden.

Gut geeignete Polymere sind Polyethylenglycole, z.B. Polyethylenglycole mit einem mittleren Molekulargewicht von 100 g/Mol bis 10000 g/Mol, insbesondere 300 g/Mol bis 2000 g/Mol. Ebenfalls geeignet, aber aufgrund ihrer geringeren Löslichkeit und Quellfähigkeit in rein wässrigen Flüssigkeiten weniger bevorzugt sind Polyethylenglycol enthaltende Blockcopolymere.

Damit sich die Polymere in der äussersten, lösungsmittelnahen Schicht frei in die Flüssigkeit erstrecken, welche die Oberfläche umgibt, ist es bevorzugt, wenn ihre die Löslichkeit im Ziellösungsmittel fördernden Gruppen wenig oder vorzugsweise keine Affinität zur Substrat-Oberfläche haben. Dadurch kann verhindert werden, dass sie sich entlang der Substrat-Oberfläche statt im wesentlichen quer dazu ausrichten.

Für viele Anwendungen ist eine feste Haftung der Polymere an der Substratoberfläche unerlässlich. Um die Haftung zu verbessern kann das Polymer einseitig mit einer die Verankerung fördernden Gruppe, dem Anker oder Ankermolekül, versehen sein. Bei diesem Anker kann es sich um eine monomere Gruppe handeln, vorzugsweise ist der Anker aber auch ein Polymer, ein Ankerpolymer.

Die Haftung zwischen dem Anker und dem Substrat kann dipolar, ionisch oder covalent sein, oder der Anker ist derart lyophob, dass er an der Substratoberfläche haftet. Die Verbindung zwischen Anker und oberflächenmodifizierendem Polymer kann ebenfalls über dipolare, ionische oder covalente Bindung erfolgen oder durch mechanische Einbindung des oberflächenmodifizierenden Polymers in eine Ankerschicht, z.B. eine Sol-Gel-Beschichtung. Die Haftung des Polymers kann auch auf Lyophobie beruhen, sei es direkt oder nach Behandlung der Substratoberfläche mit einer Haftvermittler-Schicht

Da Substratoberflächen eine Vielzahl von verschiedenen Oberflächengruppen aufweisen können, kann es vorteilhaft sein, verschiedene Anker an gleichartigen oberflächenmodifizierenden Polymeren vorzusehen und einzusetzen, oder verschiedene Arten von Ankern an verschiedenartigen Polymeren.

Ein bevorzugter Anker ist ein Polymer, das mehrere oberflächenmodifizierende Polymere einerseits und eine Vielzahl gleicher oder verschiedenartiger, die Verankerung bewirkende Gruppen andererseits aufweist, z.B. ein Polylysin mit mehreren daran gebundenen Polyethylenglykol (PEG)-Gruppen.

In einer speziellen Ausführungsform ist der Anker eine Sol-Gel-Beschichtung, in der das Polymer entweder eingelagert oder mit der es durch ionische oder kovalente Bindung verknüpft ist.

Die an einem Anker befestigten oberflächenmodifizierenden Polymere können zwischen dem Anker und der äussersten, lösungsmittelnahen Schicht eine Zwischenschicht bilden, die dichter als die äusserste, lösungsmittelnahe Schicht ist und die dadurch weniger gut quellbar ist als die weniger dicht belegte äusserste, lösungsmittelnahe Schicht.

Die Herstellung einer modifizierten Oberfläche kann auf verschiedene Art erfolgen, z.B. durch Oberflächenpolymerisation oder durch die Bildung von Self-Assembled-Monolayers (SAMs), wobei in beiden Fällen vorzugsweise darauf geachtet werden sollte, dass keine zu intensive Oberflächenbelegung resp keine zu intensive Belegung der äussersten, lösungsmittelnahen Schicht stattfindet. Dies kann beispielsweise dadurch bewirkt werden, dass nur eine beschränkte Anzahl Gruppen bereitgestellt wird, welche die Reaktion des Ankers mit dem oberflächenmodifizierenden Polymer ermöglichen, und/oder dadurch, dass eine so geringe Anzahl oberflächenmodifizierender Polymere bereitgestellt wird, dass diese nur für eine beschränkte Oberflächenbelegung (z.B. durch Reaktion mit einem Teil der terminalen Gruppen von SAMs) ausreicht und/oder dass die Reaktionszeit und/oder die Reaktionstemperatur derart gewählt wird, dass nur eine beschränkte Belegung stattfindet.

Polymere können auch radikalisch auf Oberflächen aufgebracht werden. Dafür können Oberflächenradikale z.B. durch Elektronenstrahlen, thermische Radikalinitiatoren oder UV-Initiatoren mit UV-Strahlung erzeugt werden. Die Oberflächenradikale können dann zur Ausbildung von Polymeren dienen, z.B. durch die radikalische Polymerisation von Monomeren.

In einer Verfahrensvariante wird ein polymerer Anker aus z.B. Polysiloxan mit einem Radikalstarter, z.B. dem UV-Radikalstarter Methoxyallylbisphenylmethanether, reagiert und das Ankerpolymer anschliessend an die zu modifizierende Substratoberfläche gebunden. Durch Aktivierung des Initiators kann aus einer entsprechenden Lösung eine polymere Seitenkette angebunden werden.

In einer zweiten Variante wird das Polymer, z.B. PEG an ein als Anker dienendes Polymer, z.B. ein Siloxanpolymer, gebunden und die das modifizierte Ankerpolymer enthaltende Lösung direkt für die Beschichtung der Substrat-Oberfläche verwendet.

In einer dritten Variante wird ein Allyl terminiertes Polymer an ein zur Sol-Gel-Bildung befähigtes Monomer, z.B. ein Silan, gebunden. Dieses vernetzend terminierte Polymer wird dann unter Bedingungen auf die Substratoberfläche aufgebracht, welche die Sol-Gel-Bildung ermöglichen.

Die erforderlichen Reaktionszeiten richten sich stark nach der Länge der oberflächenmodifizierenden Polymere, d.h. längere Polymere bedingen in der Regel längere Reaktionszeiten.

Die erfindungsgemässe Oberflächenbehandlung eignet sich zur Verhinderung oder zur Verminderung der Haftung von Ablagerungen, die anorganischer und/oder organischer und/oder biologischer Natur, sowie amorph oder salzartig und/oder kristallisierend sein können.

Die Entstehung der Ablagerung muss nicht notwendigerweise aus einer Flüssigkeit erfolgen (Verschmutzung von Fensterscheiben, Russ). Die Entfernung der nicht erwünschten Stoffe (z.B. Kalk) erfolgt aber im Ziellösungsmittel, entweder kontinuierlich, so dass keine Ablagerung beobachtet wird, oder durch einfaches Abspülen.

Anorganische Substanzen enthaltende Ablagerungen umfassen Kalk, Urinstein, Kesselstein, Eis, Russ, Ablagerung infolge Luftverschmutzung einschliesslich Pollenflug und Mischungen derselben, wobei die behandelten Oberflächen sehr vorteilhaft zur Vermeidung von kalkhaltigen Ablagerungen eingesetzt werden.

Als organische Ablagerungen werden im Rahmen dieser Erfindung alle Arten von organischen Ablagerungen bezeichnet, die nicht direkt biologischen Ursprungs sind, d.h. Lacke, Farben, Kunststoffe, Fette, Öle etc. und zum Teil auch Russe.

Biologische Ablagerung umfassen insbesondere Ablagerungen von Proteinen und anderem Zellmaterial, wie Biofilmen.

Anwendungsgebiete, resp. Apparaturen, die vorteilhafterweise mit einer erfindungsgemässen haftungsvermindernden Schicht versehen werden, finden sich z.B. im Sanitärbereich bei Wasser- und Abwasserleitungen etc. daneben aber auch in Wärmetauschern, Kaffeemaschinen, Wasserzählern etc.

### Kurze Beschreibung der Figuren

Weitere Ausgestaltungen, Vorteile und Anwendungen der Erfindung ergeben sich aus den abhängigen Ansprüchen. Die Figuren sollen die Erfindung weiter veranschaulichen:

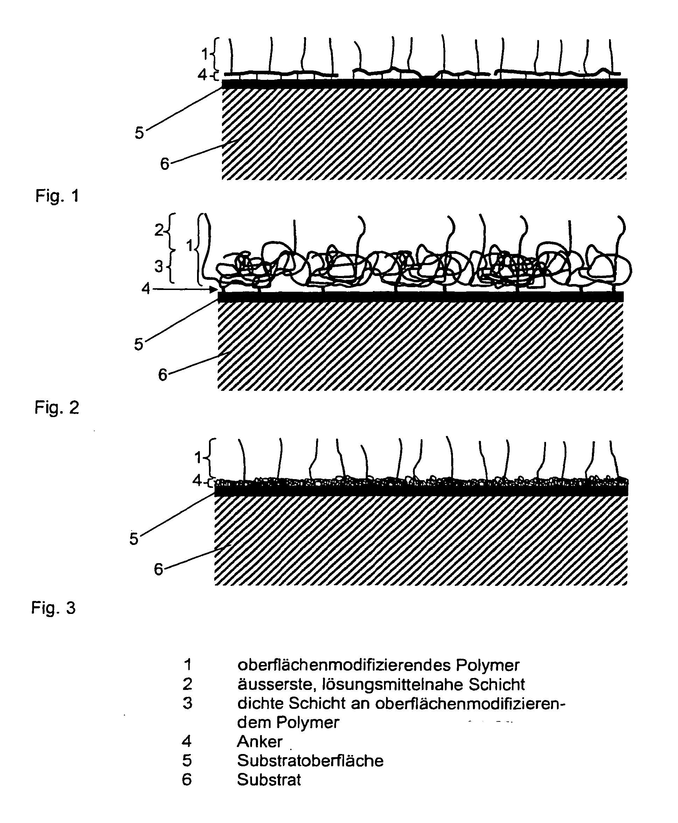

Figur 1 zeigt eine Substratoberfläche, die mit oberflächenmodifizierenden Polymerketten versehen ist, wobei jeweils mehrere Polymerketten an dasselbe Ankerpolymer gebunden sind, welches wiederum mehrere die Haftung an der Substratoberfläche fördernde Gruppen aufweist.
Figur 2 zeigt eine Substratoberfläche, die mit oberflächenmodifizierenden Polymerketten versehen ist, die eine dichte Schicht bilden, aus denen sich einige Enden in eine äussere, lösungsmittelnahe Schicht erstrecken und wobei jedes Polymer mindestens einen Anker aufweist.
Figur 3 zeigt eine modifizierte Substratoberfläche mit einer als Anker dienenden Sol-Gel-Beschichtung, aus der sich die darin oder daran verankerten oberflächenmodifizierenden Moleküle in die äusserste, lösungsmittelnahe Schicht erstrecken.

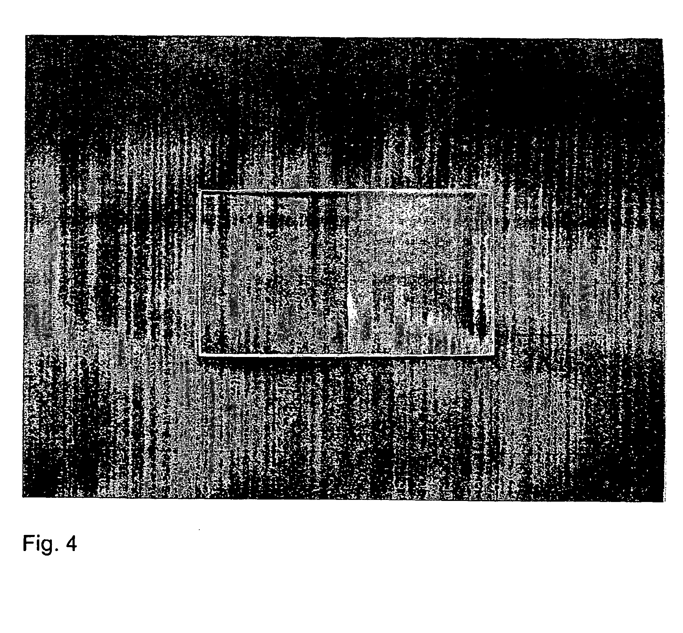

Figur 4 zeigt einen Glasträger, mit links der beschichteten Seite, rechts der unbeschichteten Seite nach einem Kalkablagerungsversuch.

### Wege zur Ausführung der Erfindung

Ein wesentliches Kriterium der äussersten Schicht aus oberflächenmodifizierendem Polymer ist der Rückzugswinkel.

Der Rückzugswinkel wird - wie der Kontaktwinkel - mit einem Kontaktwinkelbestimmungsgerät bestimmt. Während für die Messung statischer Kontaktwinkel ein Tropfen mit einem Volumen von 10 µl eines Ziellösungsmittels (z.B. Wasser) oder eines Gemisches aus Ziellösungsmitteln vorsichtig auf der Oberfläche platziert und nach 5 Sekunden das Tropfenbild elektronisch ausgewertet wird, wird der Rückzugswinkel während des Aufsaugens eines solchen Tropfens mit einer Geschwindigkeit von 60 µl/min. bestimmt.

Ein anderes Merkmal von oberflächenmodifizierenden Schichten, die für polare Lösungsmittel, insbesondere wässrige Flüssigkeiten, geeigneten sind, ist der Heteroatomanteil. Dieser kann z.B. bestimmt werden durch Analyse der obersten Schicht mittels XPS (X-ray Photoelectron Spectroscopy).

Die Erfindung wird in der Folge anhand von einigen konkreten Ausführungsbeispielen näher erläutert:

### Beispiel 1:

### Herstellung des Radikalstarters:

Der als UV-Radikalstarter verwendete Methoxyallylbisphenylmethanether wurde über die Williams-Ethersynthese aus Allylbisphenylmethanol hergestellt.

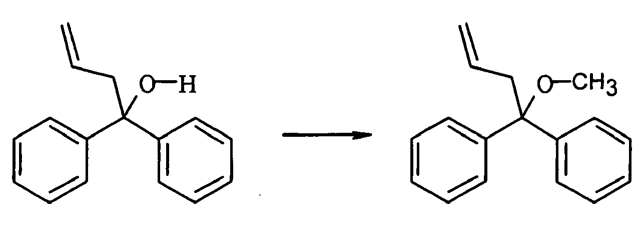

### Bindung des Radikalstarters an ein Verankerungspolymer:

Der Radikalstarter wurde über die Aktivierung einer Si-H-Gruppe an die Oberfläche gebunden.

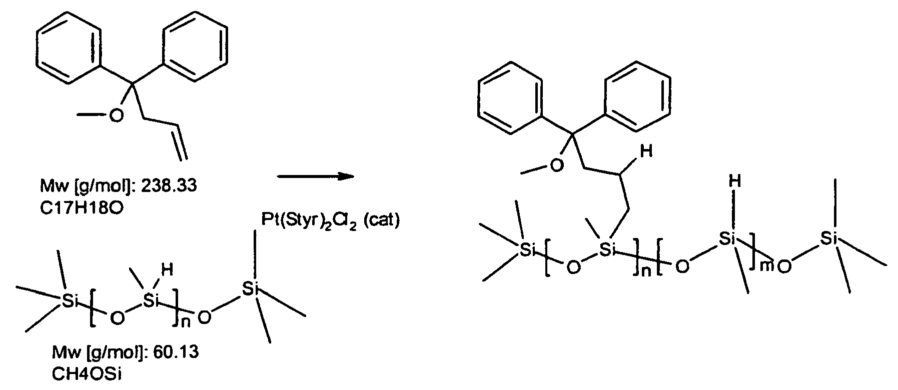

### Genaue Durchführung:

0.5 g Polyhydromethylsiloxan und 0.19 g Methoxyallylbisphenylmethanether (0.1eq) wurden in 20ml Toluol (trocken) mit 5mg cis-Dichlorobis(styrol)platin(II) (Pt(Styr)₂Cl₂-Katalysator) versetzt und über Nacht gerührt. Die Lösung wurde direkt weiterverwendet um das UV-Radikalstarterpolymer an eine Glasoberfläche zu binden. Dazu wurden mit 10% KOH gereinigte, mit dest. Wasser und abs. Ethanol gut abgespühlte und getrocknete Glasplättchen für 3h in die Lösung gestellt. (Vorgehen analog US-Patent 6 316 057)

### Polymerisation an der Oberfläche:

Die wie oben beschrieben vorbehandelten Glasplättchen wurden in eine Lösung von 20% Monomethylpolyethylenglykolacrylsäureester (Molekulargewicht 300 g/mol) in Acetonitril gestellt und während 5 Minuten mit UV bestrahlt. Darauf wurden die Glasplättchen gut gespült und getrocknet.

### Beispiel 2

### Bindung von PEG an ein Siloxanpolymer:

0.5g Polyhydromethylsiloxan und 1.25g Monomethylmonoallylpolyethylenglykolether (Molekulargewicht 340g/mol; 0.5eq) wurden in 20ml Toluol (trocken) mit 5mg cis-Dichlorobis(styrol)platin(II) (Pt(Styr)₂Cl₂-Katalysator) versetzt und bei 50°C unter N₂ für 16h gerührt. Die frische Lösung wurde danach direkt für die Beschichtung verwendet.

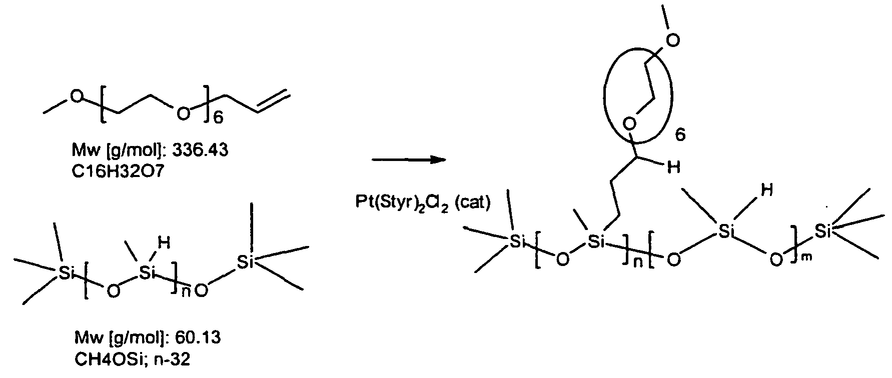

### Bindung des modifizierten Siloxan-Polymers an eine Glasoberfläche:

Mit 10% KOH gereinigte, mit dest. Wasser und abs. Ethanol gut abgespühlte und getrocknete Glasplättchen wurden für 3h in die wie oben beschrieben hergestellte Lösung gestellt. Dabei banden noch nicht abreagierte Si-H Gruppen an die Oberfläche (siehe auch US-Patent 6 316 057).

### Beispiel 3

### Kopplung von AllylPEG 750 an Silan:

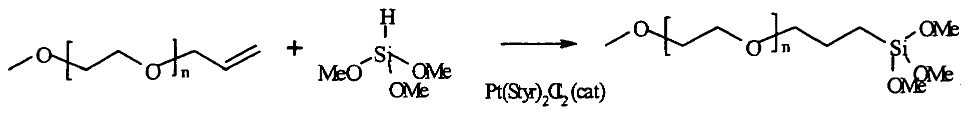

Eine Mischung von 5ml Toluol 4ml Allylmethylpolyethylenglykol (etwa 800g/mol), 6ml Trimethoxysilan und 5mg Platin(II)chlorid-bis-Styrol-Komplex als Katalysator wurden bei 75°C für 24h gerührt. Die Mischung wurde dann eingeengt und so weiterverwendet.

### Sol-Gel Beschichtung:

4ml PEG-Silan wurden mit 10ml Isopropylalkohol und 2ml 0.01mol/l Salzsäure versetzt und während 16h bei Raumtemperatur gerührt. Dann wurde das Gemisch mit Isopropylalkohol auf 100ml verdünnt. Die Probe (z.B. Glasplättchen) wurde für 10s eingetaucht, langsam rausgezogen und bei 120°C getrocknet.

### Beispiel 4

### Wirkung der Beschichtung:

Die nach Beispiel 3 behandelten Glasplättchen zeigten auch nach ausgiebiger Spülung eine starke Antihaftwirkung und wurden für einen Verkalkungstest eingesetzt.

Der Verkalkungstest wurde wie folgt durchgeführt:

Es wurde eine gut verschliessbare Plastikbox von 10cm x 6cm und 2cm Höhe mit einem 3mm Belüftungsloch im Deckel als Probenkammer verwendet. Für die Versuche wurde eine aus Calciumchlorid und Natriumhydrogencarbonat frisch hergestellte Lösung mit 10 mmol/l Ca²⁺-Ionen und 20 mmol/l Hydrogencarbonat-Ionen-Konzentration verwendet. Die Glas-Probenträger waren 8cm x 3cm gross und wurden nach der Beschichtung gemäss den Beispielen 1 bis 3 in die Probenkammer gelegt. Die Umwälzung dieser Verkalkungslösung erfolgte mit einem Propellerrührer mit 100 U/min. Die Proben wurden nach 3h, 16h und 64h aus der Probenkammer entfernt, wenig abgespült und auf Verkalkung untersucht.

Die derart behandelte Fläche konnte Kalk aufweisen. Dieser haftete aber nicht und liess sich leicht abspülen.

Während in der vorliegenden Anmeldung bevorzugte Ausführungen der Erfindung beschrieben sind, ist klar darauf hinzuweisen, dass die Erfindung nicht auf diese Beschränkt ist und in auch anderer Weise innerhalb des Umfangs der folgenden Ansprüche ausgeführt werden kann.

## Patentansprüche

1. Substrat für die Verwendung in polaren Ziellösungsmitteln, insbesondere wässrigen Lösungen, Suspensionen oder Emulsionen, mit einer haftungsvermindernden oder haftungsverhindernden Oberfläche, wobei die Oberfläche mit einer haftungsvermindernden oder haftungsverhindernden Oberflächenschicht versehen ist, die zumindest in einer äussersten, bei Verwendung lösungsmittelnahen Schicht sich in die Umgebung der Oberfläche erstreckende oberflächenmodifizierende Polymere aufweist und wobei die Schicht einen Rückzugswinkel von <40° aufweist und die oberflächenmodifizierenden Polymere einen Heteroatomanteil von ≤ 4 haben, wobei der Rückzugswinkel dem dynamisch bestimmten Kontaktwinkel während des Absaugens eines auf die Oberfläche aufgebrachten Tropfens entspricht,
ein Heteroatomanteil oder Heterosubstitutionsgrad von maximal 4 bedeutet, dass maximal 4 C-Atome oder Si-Atome pro Heteroatom vorhanden sind, und
unter der äussersten, lösungsmittelnahen Schicht, die Schicht oder der Teil einer Oberflächenbeschichtung verstanden wird, deren Moleküle oder Kettenteile sich frei in das Lösungsmittel erstrecken.

2. Substrat gemäss Anspruch 1, **dadurch gekennzeichnet, dass** der Rückzugswinkel <30° ist, insbesondere <20°, speziell bevorzugt <10°.

3. Substrat gemäss Anspruch 1 oder 2, **dadurch gekennzeichnet, dass** die Quellbarkeit derart ist, dass die Volumenzunahme (bestimmt im Bulk) mindestens 20 % bezogen auf das Volumen im trockenen Zustand beträgt und/oder dass die Löslichkeit im Ziellösungsmittel mindestens 10g/l beträgt.

4. Substrat gemäss einem der vorangehenden Ansprüche, **dadurch gekennzeichnet, dass** die äusserste, lösungsmittelnahe Schicht mindestens 1 nm bis mindestens 10 nm dick ist.

5. Substrat gemäss einem der vorangehenden Ansprüche, **dadurch gekennzeichnet, dass** die äusserste, lösungsmittelnahe Schicht maximal 100 nm dick ist.

6. Substrat gemäss einem der vorangehenden Ansprüche, **dadurch gekennzeichnet, dass** maximal 40% der Heteroatome enthaltenden Gruppen deprotonierbar und/oder zur Wasserstoffbrückenbildung befähigt sind, vorzugsweise maximal 20 %, insbesondere 0%.

7. Substrat gemäss einem der vorangehenden Ansprüche, **dadurch gekennzeichnet, dass** die Anzahl sp²-hybridisierter C-Zentren in der äussersten, lösungsmittelnahen Schicht maximal 50 % ausmachen, vorzugsweise maximal 10%, speziell bevorzugt 0%.

8. Substrat gemäss einem der vorangehenden Ansprüche, **dadurch gekennzeichnet, dass** die oberflächenmodifizierenden Polymere Mischungen von oberflächenmodifizierenden Polymeren sind.

9. Substrat gemäss einem der vorangehenden Ansprüche, **dadurch gekennzeichnet, dass** die oberflächenmodifizierenden Polymere ausgewählt sind aus der Gruppe bestehend aus
- Seitenkettenmodifizierten Polymeren,
- Polyoxoalkylenen,
- Polyalkyleniminen,
- Polyamiden (substituierte und unsubstituierte),
- Polyetherestern,
- Polyetherurethanen,
- Polyetheramiden,
- Poly-Sulfoxiden,
- Poly-Sulfonen, und
- Phosphorhaltigen Polymeren.

10. Substrat gemäss einem der vorangehenden Ansprüche, **dadurch gekennzeichnet, dass** die oberflächenmodifizierenden Polymere Polyethylenglycol enthalten oder daraus bestehen.

11. Substrat gemäss einem der vorangehenden Ansprüche, **dadurch gekennzeichnet, dass** die oberflächenmodifizierenden Polymere der äussersten, lösungsmittelnahen Schicht über einen Anker und gegebenenfalls eine dichtere Zwischenschicht aus oberflächenmodifizierendem Polymer an der Substratoberfläche haften.

12. Substrat gemäss Anspruch 11, **dadurch gekennzeichnet, dass** mehr als eine Art von Anker pro Art an oberflächenmodifizierenden Polymeren vorhanden ist.

13. Substrat gemäss Anspruch 11 oder 12, **dadurch gekennzeichnet, dass** der Anker eine Sol-Gel-Beschichtung ist.

14. Substrat gemäss einem der Ansprüche 11 bis 13, **dadurch gekennzeichnet, dass** der Anker ein Polymer mit mehreren die Haftung am Substrat bewirkenden Gruppen gleicher oder unterschiedlicher Art ist.

15. Substrat gemäss einem der Ansprüche 11 bis 14, **dadurch gekennzeichnet, dass** die Verbindung vom Polymer zum Anker und/oder vom Anker zur Substratoberfläche unabhängig von einander auf einer lyophoben, einer ionischen oder, vorzugsweise, einer kovalenten Bindung beruht.

16. Substrat gemäss einem der Ansprüche 11 bis 15, **dadurch gekennzeichnet, dass** die Bindung des Ankers an der Substratoberfläche auf mechanischer Verankerung beruht.

17. Substrat gemäss einem der Ansprüche 11 bis 14, **dadurch gekennzeichnet, dass** die Bindung des Ankers an der Substratoberfläche auf radikalisch erfolgter Verankerung beruht.

18. Substrat gemäss einem der vorangehenden Ansprüche, **dadurch gekennzeichnet, dass** es eine Apparatur aus dem Sanitärbereich ist, wie eine Wasserleitung oder eine Abwasserleitung.

19. Substrat gemäss einem der Ansprüche 1 bis 17, **dadurch gekennzeichnet, dass** es ein Bestandteil eines Wärmetauschers, einer Kaffeemaschine oder eines Wasserzählerers ist.

20. Verwendung eines Substrats gemäss einem der vorangehenden Ansprüche zur Verhinderung oder zur Verminderung der Haftung von Ablagerungen.

21. Verwendung gemäss Anspruch 20, **dadurch gekennzeichnet, dass** die Ablagerungen anorganische Ablagerungen oder Ablagerungen, die anorganische Stoffe enthalten, sind.

22. Verwendung gemäss Anspruch 20 oder 21, **dadurch gekennzeichnet, dass** die Ablagerung salzartig ist.

23. Verwendung gemäss einem der Ansprüche 20 bis 22, **dadurch gekennzeichnet, dass** die Ablagerung kristallisierend ist.

24. Verwendung gemäss einem der Ansprüche 20 bis 23, **dadurch gekennzeichnet, dass** die Ablagerung eine Mischung aus anorganischen Ablagerungen sowie auch organischen und/oder biologischen Ablagerungen ist.

25. Verwendung gemäss Anspruch 24, **dadurch gekennzeichnet, dass** die organischen und/oder biologischen Ablagerung ausgewählt sind aus der Gruppe umfassend Proteine, Biofilme, Polymere und Mischungen derselben.

26. Verwendung gemäss einem der Ansprüche 20 bis 25, **dadurch gekennzeichnet, dass** die Ablagerung ausgewählt ist aus der Gruppe umfassend Kalk, Urinstein, Kesselstein, Eis, Russ, Ablagerung infolge Luftverschmutzung einschliesslich Pollenflug und Mischungen derselben.

27. Verwendung gemäss einem der Ansprüche 20 bis 26, **dadurch gekennzeichnet, dass** die Ablagerung Kalk enthält oder daraus besteht.

28. Verwendung gemäss Anspruch 20, **dadurch gekennzeichnet, dass** die Ablagerungen biologische und/oder organische Ablagerungen sind.

29. Verwendung gemäss Anspruch 28, **dadurch gekennzeichnet, dass** die Ablagerungen biologische Ablagerungen sind, insbesondere Ablagerungen von Proteinen und/oder Biofilmen.

30. Substrat, wie in einem der Ansprüche 1 bis 19 beschrieben, aber mit einem Heteroatomanteil >4.

## Claims

1. A substrate for use in polar target solvents, in particular aqueous solutions, suspensions or emulsions, with an adhesion reducing or adhesion preventing surface, wherein the surface is provided with an adhesion reducing or adhesion preventing surface layer that in at least an outermost layer that upon use is nearby the solvent has surface modifying polymers that extend into the environment of the surface and wherein the layer has a retreat angle of <40° and the surface modifying polymers have a hetero atom portion of ≤ 4, wherein
the retreat angle corresponds to the dynamically measured contact angle during the sucking of a droplet applied to the surface,
a heteroatom portion or degree of heterosubstitution of at most 4 means that at most 4 C atoms or Si atoms are present per heteroatom, and
the outermost layer nearby the solvent is the layer or the part of a surface coating the molecules of which extend freely into the solvent.

2. The substrate of claim 1, **characterized in that** the retreat angle is <30°, in particular <20°, especially preferred <10°.

3. The substrate of claim 1 or 2, **characterized in that** the swellability is such that the increase in volume (determined in the bulk) is at least 20 % referred to the volume in the dry state and/or that the solubility in the target solvent is at least 10g/l.

4. The substrate of one of the preceding claims, **characterized in that** the outermost layer nearby the solvent is at least 1 nm to at least 10 nm thick.

5. The substrate of one of the preceding claims, **characterized in that** the outermost layer is at most 100 nm thick.

6. The substrate of one of the preceding claims, **characterized in that** at most 40% of the hetero atoms comprising groups can be deprotonated and/or are able to form hydrogen bonds, preferably at most 20 %, especially 0%.

7. The substrate of one of the preceding claims, **characterized in that** the quantity of sp²-hybridised C-centers in the outermost layer nearby the solvent is at most 50 %, preferably at most 10%, especially preferred 0%.

8. The substrate of one of the preceding claims, **characterized in that** the surface modifying polymers are mixtures of surface modifying polymers.

9. The substrate of one of the preceding claims, **characterized in that** the surface modifying polymers are selected from the group consisting of
- side-chain modified polymers,
- polyoxoalkylenes,
- polyalkylene imines,
- polyamides (substituted and unsubstituted),
- polyether esters,
- polyether urethanes,
- polyether amides,
- polysulfoxides,
- polysulfones, and
- phosphorus comprising polymers.

10. The substrate of one of the preceding claims, **characterized in that** the surface modifying polymers contain or consist of polyethylene glycol.

11. The substrate of one of the preceding claims, **characterized in that** the surface modifying polymers of the outermost layer nearby the solvent adhere to the surface of the substrate via an anchor and optionally a thicker intermediate layer of surface modifying polymer.

12. The substrate of claim 11, **characterized in that** more than one kind of anchor is present per kind of surface modifying polymer.

13. The substrate of claim 11 or 12, **characterized in that** the anchor is a sol-gel coating.

14. The substrate of one of claims 11 to 13, **characterized in that** the anchor is a polymer with several groups of same or different kind that effect the adherence to the substrate.

15. The substrate of one of claims 11 to 14, **characterized in that** the connection between polymer and anchor and/or from the anchor to the surface of the substrate independent from each other is based on a lyophobic, ionic or, preferably, a covalent bond.

16. The substrate of one of claims 11 to 15, **characterized in that** the bonding of the anchor to the surface of the substrate is based on a mechanical anchoring.

17. The substrate of one of claims 11 to 14, **characterized in that** the bonding of the anchor to the substrate is based on a radically performed anchoring.

18. The substrate of one of the preceding claims, **characterized in that** it is an apparatus of the sanitary sector such as a water pipe or a waste-water pipe.

19. The substrate of one of claims 1 to 17, **characterized in that** it is a part of a heat exchanger, a coffee machine or a water meter.

20. Use of a substrate according to one of the preceding claims for preventing or reducing the adhesion of deposits.

21. The use of claim 20, **characterized in that** the deposits are inorganic deposits or deposits comprising inorganic substances.

22. The use of claim 20 or 21, **characterized in that** the deposit is salt-like.

23. The use of one of claims 20 to 22, **characterized in that** the deposit is crystallizing.

24. The use of one of claims 20 to 23, **characterized in that** the deposit is a mixture of inorganic deposits as well as also organic and/or biological deposits.

25. The use of claim 24, **characterized in that** the organic and/or biological deposit is selected from the group comprising proteins, biofilms, polymers and mixtures thereof.

26. The use of one of claims 20 to 25, **characterized in that** the deposit is selected from the group comprising lime, urinescale, scale, ice, soot, deposits caused by air pollution including pollen loaded air and mixtures thereof.

27. The use of one of claims 20 to 26, **characterized in that** the deposit contains lime or consists thereof.

28. The use of claim 20, **characterized in that** the deposits are biological and/or organic deposits.

29. The use of claim 28, **characterized in that** the deposits are biological deposits, in particular deposits of proteins and/or biofilms.

30. A substrate as defined in anyone of claims 1 to 19 but with a hetero atom portion of >4.

## Revendications

1. Substrat destiné à être utilisé dans des solvants cibles, en particulier des solutions, suspensions ou émulsions aqueuses, et présentant une surface diminuant l'adhérence ou inhibant l'adhérence,
la surface étant dotée d'une couche de surface qui diminue l'adhérence ou qui inhibe l'adhérence et qui présente au moins dans une strate extérieure, proche du solvant en utilisation, des polymères de modification de surface qui s'étendent dans l'environnement de la surface, la strate présentant un angle rétrograde < 40° et les polymères de modification de surface ayant une teneur ≤ 4 en hétéroatomes, l'angle rétrograde correspondant à l'angle de contact défini dynamiquement pendant l'aspiration d'une goutte appliquée sur la surface,
une teneur en hétéroatomes ou un degré d'hétérosubstitution d'au plus 4 indiquant qu'au plus 4 atomes de C ou atomes de Si sont présents pour chaque hétéroatome et
par strate extérieure proche du solvant, on entend la strate ou la partie d'un revêtement de surface dont des molécules ou des parties de chaîne s'étendent librement dans le solvant.

2. Substrat selon la revendication 1, **caractérisé en ce que** l'angle rétrograde est < 30°, en particulier < 20° et de façon particulièrement préférable < 10°.

3. Substrat selon les revendications 1 ou 2, **caractérisé en ce que** son aptitude au gonflement est telle que l'augmentation de volume (définie en vrac) par rapport au volume à l'état sec est d'au moins 20 % et/ou en ce que la solubilité dans le solvant cible est d'au moins 10 g/l.

4. Substrat selon l'une des revendications précédentes, **caractérisé en ce que** la strate extérieure proche du solvant a une épaisseur d'au moins 1 nm à au moins 10 nm.

5. Substrat selon l'une des revendications précédentes, **caractérisé en ce que** la strate extérieure proche du solvant a une épaisseur d'au plus 100 nm.

6. Substrat selon l'une des revendications précédentes, **caractérisé en ce qu'**au plus 40 %, de préférence au plus 20 % et en particulier 0 % des groupes contenant des hétéroatomes peuvent être déprotonés et/ou capables de former des ponts hydrogène.

7. Substrat selon l'une des revendications précédentes, **caractérisé en ce que** le nombre des centres C hybridés sp² de la strate extérieure proche du solvant constitue au plus 50 %, de préférence au plus 10 % et de façon particulièrement préférable 0 %.

8. Substrat selon l'une des revendications précédentes, **caractérisé en ce que** les polymères de modification de surface sont des mélanges de polymères de modification de surface.

9. Substrat selon l'une des revendications précédentes, **caractérisé en ce que** les polymères de modification de surface sont sélectionnés dans l'ensemble constitué :
des polymères à chaîne latérale modifiée,
des polyoxyalkylènes,
des polyalkylèneimines,
des polyamides (substitués ou non substitués),
des polyéthyeresters,
des polyétheruréthanes,
des polyétheramides,
des polysulfoxydes,
des polysulfones et
des polymères contenant du phosphore.

10. Substrat selon l'une des revendications précédentes, **caractérisé en ce que** les polymères de modification de surface contiennent du polyéthylène glycol ou en sont constitués.

11. Substrat selon l'une des revendications précédentes, **caractérisé en ce que** les polymères de modification de surface de la strate extérieure proche du solvant adhèrent à la surface du substrat par un ancrage et éventuellement une couche intermédiaire plus dense constituée d'un polymère de modification de surface.

12. Substrat selon la revendication 11, **caractérisé en ce qu'**il présente plus d'un type d'ancrage par type de polymère de modification de surface.

13. Substrat selon les revendications 11 ou 12, **caractérisé en ce que** l'ancrage est un revêtement par sol-gel.

14. Substrat selon l'une des revendications 11 à 13, **caractérisé en ce que** l'ancrage est un polymère qui présente plusieurs groupes de même nature ou de natures différentes qui ont un effet d'adhérence sur le substrat.

15. Substrat selon l'une des revendications 11 à 14, **caractérisé en ce que** la liaison du polymère à l'ancrage et/ou de l'ancrage à la surface du substrat repose indépendamment l'une de l'autre sur une liaison lyophobe, ionique ou de préférence covalente.

16. Substrat selon l'une des revendications 11 à 15, **caractérisé en ce que** la liaison de l'ancrage à la surface du substrat repose sur un ancrage mécanique.

17. Substrat selon l'une des revendications 11 à 14, **caractérisé en ce que** la liaison de l'ancrage à la surface du substrat repose sur un ancrage réalisé par voie radicalaire.

18. Substrat selon l'une des revendications 11 à 14, **caractérisé en ce qu'**il est un appareil du secteur sanitaire, par exemple un conduit d'eau ou un conduit d'eau usée.

19. Substrat selon l'une des revendications 1 à 17, **caractérisé en ce qu'**il fait partie d'un échangeur de chaleur, d'une machine à café ou d'un compteur d'eau.

20. Utilisation d'un substrat selon l'une des revendications précédentes pour inhiber ou diminuer l'adhérence de dépôts.

21. Utilisation selon la revendication 20, **caractérisée en ce que** les dépôts sont des dépôts minéraux ou des dépôts qui contiennent des substances minérales.

22. Utilisation selon les revendications 20 ou 21, **caractérisée en ce que** les dépôts sont de nature saline.

23. Utilisation selon l'une des revendications 20 à 22, **caractérisée en ce que** le dépôt cristallise.

24. Utilisation selon l'une des revendications 20 à 23, **caractérisée en ce que** le dépôt est un mélange de dépôts minéraux ainsi que de dépôts organiques et/ou biologiques.

25. Utilisation selon la revendication 24, **caractérisée en ce que** les dépôts organiques et/ou biologiques sont sélectionnés dans l'ensemble comprenant les protéines, les biofilms, les polymères et leurs mélanges.

26. Utilisation selon l'une des revendications 20 à 25, **caractérisée en ce que** le dépôt est sélectionné dans l'ensemble constitué du calcaire, des dépôts de tartre/urine, du tartre, de la glace, de la suie, des dépôts provenant de la pollution de l'air, notamment le pollen et de leurs mélanges.

27. Utilisation selon l'une des revendications 20 à 26, **caractérisée en ce que** le dépôt contient du calcaire ou en est constitué.

28. Utilisation selon la revendication 20, **caractérisée en ce que** les dépôts sont des dépôts biologiques et/ou organiques.

29. Utilisation selon la revendication 28, **caractérisée en ce que** les dépôts sont des dépôts biologiques, en particulier des dépôts de protéine et/ou des biofilms.

30. Substrat décrit dans l'une des revendications 1 à 19, mais dont la teneur en hétéroatomes est > 4.
